# EUROPÄISCHE PATENTSCHRIFT

(11) **EP 4 272 301 B1**
(45) Veröffentlichungstag und Bekanntmachung des Hinweises auf die Patenterteilung: **03.06.2026**
(21) Anmeldenummer: 21823768.3
(22) Anmeldetag: 30.11.2021
(51) Int. Cl.: H02K 15/023, H02K 15/025, H02K 19/14, H02K 1/24, H02K 1/26, H02K 17/20

(54) **ELEKTROMOTOR MIT ROTOR UND KURZSCHLUSSKÄFIG**
ELECTRIC MOTOR HAVING ROTOR AND SQUIRREL CAGE WINDING
MOTEUR ÉLECTRIQUE COMPORTANT UN ROTOR ET UN ENROULEMENT À CAGE D'ÉCUREUIL

(30) Priorität: 30.12.2020 CN 202011624853; 02.02.2021 DE 102021000493
(43) Veröffentlichungstag der Anmeldung: 08.11.2023
(73) Patentinhaber: SEW-EURODRIVE GmbH & Co. KG, 76646 Bruchsal (DE)
(72) Erfinder: JINCHANG, Li, Tianjin (CN)
(86) Internationale Anmeldenummer: PCT/EP2021/025475
(87) Internationale Veröffentlichungsnummer: WO 2022/144089

(56) Entgegenhaltungen:
- EP-A1- 1 524 755
- KR-A- 20090 007 050
- KR-B1- 102 010 026
- US-A- 1 945 028

## Beschreibung

Die Erfindung betrifft ein Elektromotor mit Rotor und Kurzschlusskäfig.

Es ist allgemein bekannt, dass ein Elektromotor mit Kurzschlusskäfig als Asynchronmotor betreibbar ist.

**Aus der** DE 18 60 673 U **ist ein Wechselstrommotor bekannt.**

**Aus der** DE 72 24 206 U **ist ein aus einem Einphasennetz gespeister Reluktanzmotor bekannt.**

**Aus der** US 1 945 028 A **ist als nächstliegender Stand der Technik ein Synchronnmotor bekannt.**

**Aus der** GB 1 141 922 A **ist ein Wechselstrommotor bekannt.**

**Aus der** EP 1 524 755 A1 **ist ein am Netz startbarer Reluktanz-Synchronmotor bekannt.**

**Aus der** KR 2009 0007050 A **ist ein Rotor eines Elektromotors bekannt.**

**Aus der** KR 102 010 026 B1 **ist ebenfalls ein Rotor eines Elektromotors bekannt.**

Der Erfindung liegt daher die Aufgabe zugrunde, einen Elektromotor weiterzubilden, der trotz einfacher Herstellung einen verbesserten Betrieb des Elektromotors ermöglicht.

Erfindungsgemäß wird die Aufgabe bei dem Elektromotor nach den in Anspruch 1 angegebenen Merkmalen gelöst.

Wichtige Merkmale der Erfindung bei dem Elektromotor mit Rotor und Kurzschlusskäfig sind, dass der Kurzschlusskäfig zwei voneinander axial, insbesondere also in Richtung der Drehachse des Rotors, beabstandete, über Stäbe miteinander verbundene, insbesondere elektrisch verbundene, Ringe aufweist,
wobei der Rotor axial durchgehende Ausnehmungen zur Aufnahme von Stäben aufweist,
wobei die Ausnehmungen in Umfangsrichtung voneinander beabstandet sind,
wobei der Rotor nach radial außen offene Axialnuten aufweist,
wobei der von den Axialnuten überdeckte Radialabstandsbereich den von den Stäben überdeckten Radialabstandsbereich umfasst.

Von Vorteil ist dabei, dass ein Betrieb des Elektromotors nach Art eines Asynchronmotors einerseits und nach Art eines Reluktanzmotors andererseits in einfacher Weise kombiniert ermöglicht ist. Der Elektromotor ist also derart weitergebildet, dass ein vorteilhaftes Anlaufen des Motors und ein im Dauerbetrieb zur Frequenz des vom Stator des Motors erzeugten Drehfelds synchroner Betrieb ermöglicht ist. Darüber hinaus ist die Herstellung sehr einfach ausführbar. Denn es werden am Rotor des Asynchronmotors zusätzlich nur Axialnuten eingefräst, die den Reluktanzbetrieb ermöglichen.

Bei einer vorteilhaften Ausgestaltung ist die Ringachse der Ringe, insbesondere der vorzugsweise als Kreisringe ausgeführten Ringe, koaxial zur Drehachse des Rotors ausgerichtet. Von Vorteil ist dabei, dass der Kurzschlusskäfig koaxial ausgerichtet ist zur Rotorwelle.

Bei einer vorteilhaften Ausgestaltung weisen die Axialnuten einen verschwindenden Schrägungswinkel auf. Von Vorteil ist dabei, dass der Reluktanzbetrieb parallel zum Asynchronbetrieb ausführbar ist.

Bei einer vorteilhaften Ausgestaltung weisen die Axialnuten einen ersten Schrägungswinkel auf,
wobei die Stäbe einen zweiten Schrägungswinkel aufweisen, wobei der erste Schrägungswinkel unterschiedlich zum zweiten Schrägungswinkel ist,
insbesondere wobei der erste Schrägungswinkel Null beträgt und der zweite Schrägungswinkel einen Wert zwischen 5° und 30° aufweist. Von Vorteil ist dabei, dass der asynchrone Betrieb ein anderes Polrasten erzeugt als der Reluktanzbetrieb, so dass insgesamt ein vermindertes Polrasten bewirkbar ist.

Bei einer vorteilhaften Ausgestaltung ist der von der jeweiligen Axialnut an einer jeweiligen axialen Position überdeckte Umfangswinkelbereich unabhängig von der axialen Position. Von Vorteil ist dabei, dass die Axialnut sich nur in axialer Richtung erstreckt und somit im Gegensatz zu den Stäben des Kurzschlusskäfigs ein anderes Polrasten verursacht, so dass die Überlagerung der Rastmomentschwankungen beim Drehbetrieb des Motors eine verminderte Amplitude ermöglicht.

Bei einer vorteilhaften Ausgestaltung weisen die Axialnuten einen von der axialen Position unabhängigen Querschnitt auf. Von Vorteil ist dabei, dass die Axialnuten einfach fertigbar sind, indem ein Fräswerkzeug in axialer Richtung dem Rotor entlang bewegbar ist.

Bei einer vorteilhaften Ausgestaltung ist der von der jeweiligen Axialnut an einer jeweiligen axialen Position überdeckte Umfangswinkelbereich betragsmäßig größer als der von dem jeweiligen Stab in Umfangsrichtung überdeckte Bereich, insbesondere mindestens dreimal größer. Von Vorteil ist dabei, dass die Wirkung einer jeweiligen Nut größer dimensionierbar ist als die Wirkung eines einzelnen Stabs, insbesondere bei der synchronen Drehzahl des Motors. Denn die Nutbreite bewirkt entsprechend dimensionierte Reluktanzpole.

Bei einer vorteilhaften Ausgestaltung ist der jeweilige Ring mittels eines Bajonettverschlusses am Rotor befestigt,
insbesondere indem der Ring ein in Umfangsrichtung sich erstreckendes Langloch aufweist, durch welches eine in eine axial gerichtete Gewindebohrung des Rotors eingeschraubte Schraube hindurchragt, deren Schraubenkopf den Ring auf die Enden von Stäben drückt,
wobei die axiale Wandstärke des Rings am Randbereich des Langlochs mit zunehmendem Umfangswinkel zunehmend oder mit abnehmendem Umfangswinkel zunehmend ausgeführt ist. Von Vorteil ist dabei, dass eine einfache aber auch sichere Befestigung ermöglicht ist, die eine belastbare Kontaktierung ermöglicht.

Bei einer vorteilhaften Ausgestaltung sind in dem jeweiligen nicht von den Axialnuten unterbrochenen Umfangswinkelbereich die Ausnehmungen in Umfangsrichtung voneinander regelmäßig beabstandet. Von Vorteil ist dabei, dass der Kurzschlusskäfig in Umfangsrichtung voneinander regelmäßig beabstandete Stäbe aufweist, insbesondere zumindest in den nicht von Axialnuten unterbrochenen Bereichen.

Bei einer vorteilhaften Ausgestaltung weist das Material des Rotors eine höhere magnetische Permeabilität auf als das Material der Rotorwelle. Von Vorteil ist dabei, dass ein genügend starker Reluktanzeffekt erzeugbar ist.

Bei einer vorteilhaften Ausgestaltung sind die Axialnuten in Umfangsrichtung voneinander regelmäßig beabstandet,
insbesondere wobei die Anzahl der Axialnuten zwischen drei und neun beträgt. Von Vorteil ist dabei, dass ein synchroner Betrieb des Motors mittels des Reluktanzeffekts erreichbar ist.

Bei einer vorteilhaften Ausgestaltung sind die Axialnuten axial durchgehend am Rotor eingebracht. Von Vorteil ist dabei, dass ein möglichst großer Reluktanzeffekt erreichbar.

Bei einer vorteilhaften Ausgestaltung ist der Rotor als Blechpaket ausgeführt,
insbesondere wobei der Rotor als Stapel von Einzelblechen, die jeweils als Stanzteile gefertigt sind, ausgeführt ist, wobei die Einzelbleche miteinander schweißverbunden sind und/oder mittels durch den Stapel axial durchgehender Zugstange aufeinandergepresst sind,
insbesondere wobei die Stapelrichtung parallel zur axialen Richtung ausgerichtet ist. Von Vorteil ist dabei, dass geringe Verluste trotz des Drehfeldes, insbesondere also eines Wechselmagnetfeldes, bewirkt werden. Die Stapelrichtung ist dabei parallel zur axialen Richtung. Vorzugsweise ist als Blech Elektroblech verwendet, insbesondere also Eisensilizidhaltiges Blech.

Durch das Ausgießen der Ausnehmungen mit dem Material, insbesondere Aluminium oder Kupfer, ist das Blechpaket nach dem Erkalten des Materials mechanisch stabilisiert, so dass die Nuten durch Fräsen einbringbar sind.

**Erfindungsgemäß** verbinden erste Stäbe des Kurzschlusskäfigs die beiden Ringe miteinander und andere Stäbe enden in jeweiligen Nuten blind. Von Vorteil ist dabei, dass eine einfache Herstellung ermöglicht ist, indem zuerst Material in Ausnehmungen gegossen wird und danach die Nuten gefräst werden.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

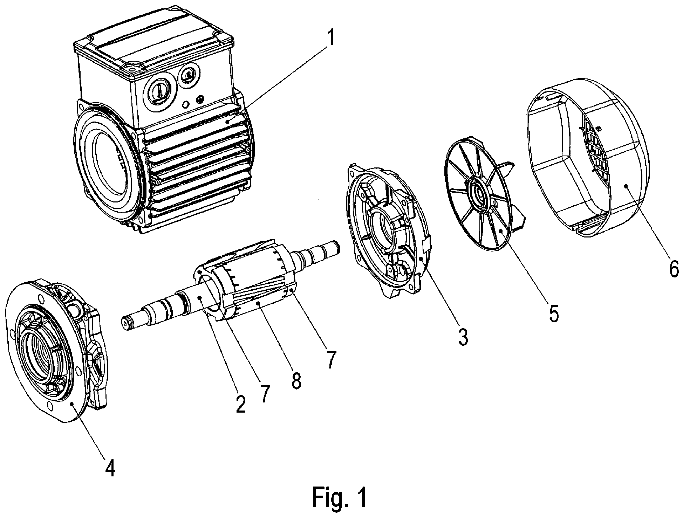

In der Figur 1 ist ein erfindungsgemäßer Elektromotor in Schrägansicht explodiert dargestellt.

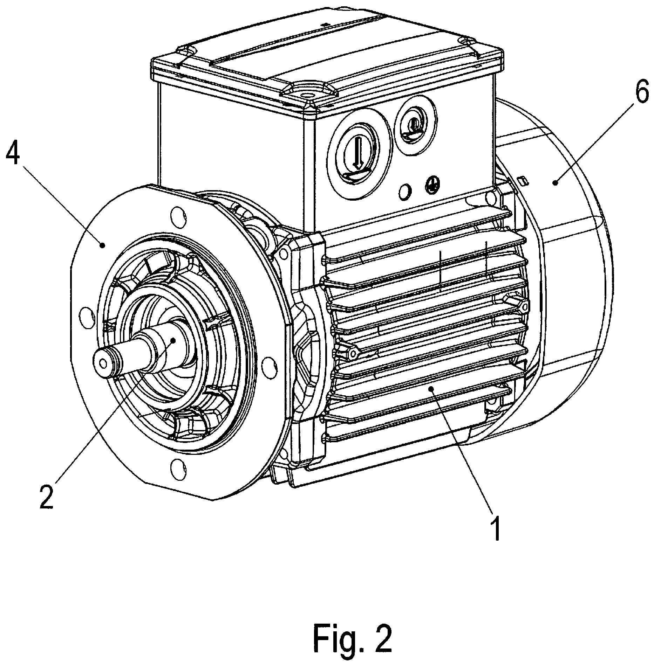

In der Figur 2 ist der Elektromotor in Schrägansicht dargestellt.

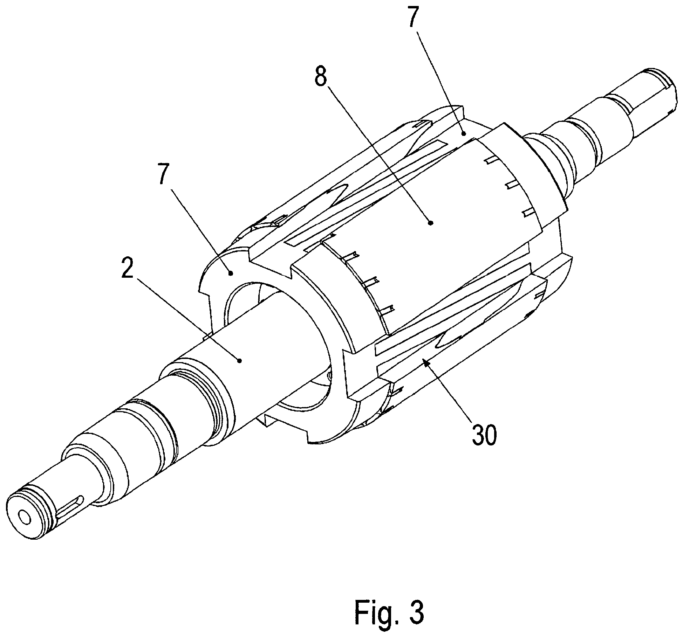

In der Figur 3 ist der auf die Rotorwelle 2 aufgeschobene Rotor in Schrägansicht dargestellt.

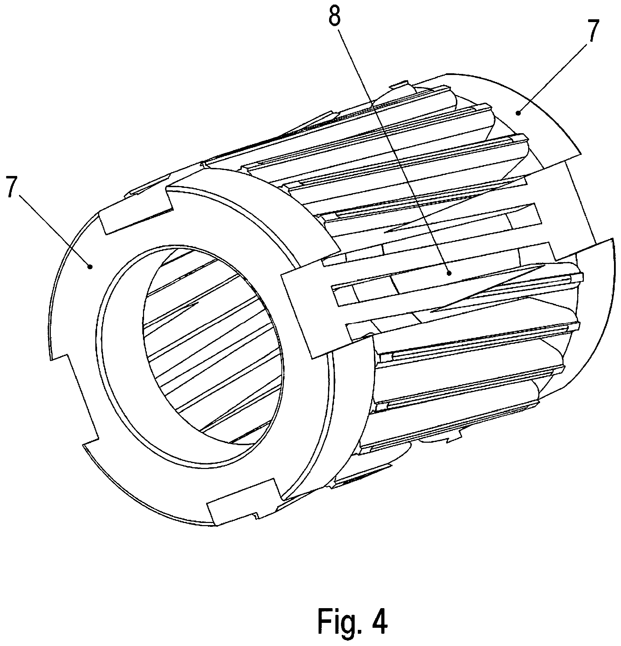

In der Figur 4 ist der Kurzschlusskäfig in Schrägansicht dargestellt.

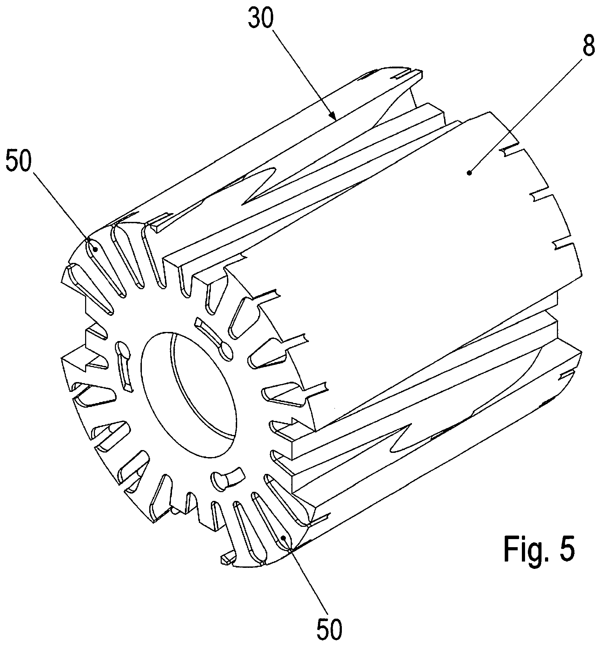

In der Figur 5 ist der Rotor ohne Kurzschlusskäfig in Schrägansicht dargestellt.

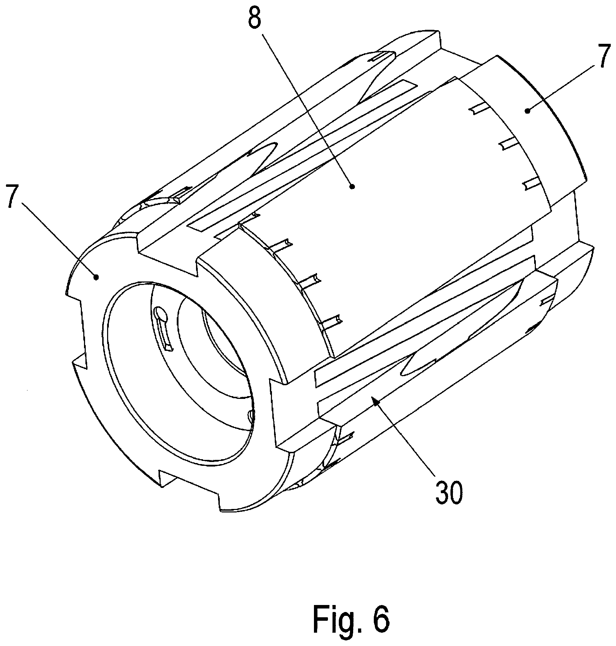

In der Figur 6 ist der Rotor mit Kurzschlusskäfig in Schrägansicht dargestellt.

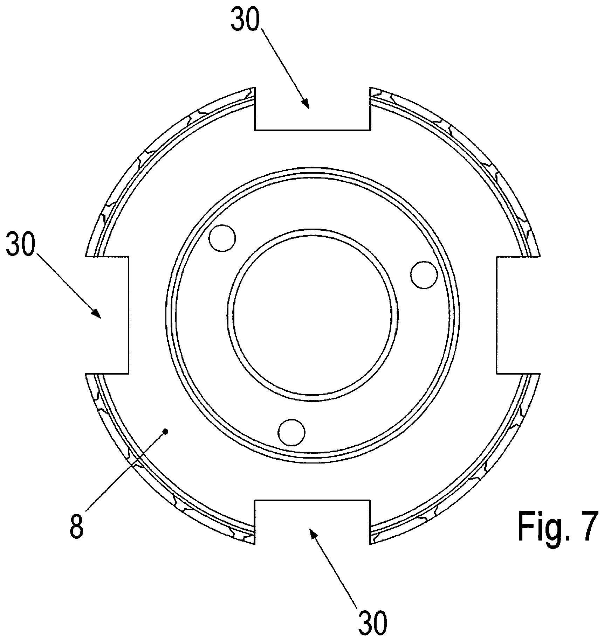

In der Figur 7 ist eine Vorderansicht auf den Rotor dargestellt.

Wie in den Figuren dargestellt, weist der Elektromotor ein Statorgehäuse 1 auf, an dessen Außenseite Kühlrippen ausgeformt sind und ein Anschlusskasten angeordnet ist.

Mit dem Statorgehäuse 1 ist ein Lagerschild 3 und ein Lagerflansch 4 verbunden, wobei das Statorgehäuse 1 zwischen dem Lagerschild 3 und dem Lagerflansch 4 angeordnet ist.

Die Rotorwelle 2 ist über ein erstes im Lagerschild 3 aufgenommene Lager und ein zweites im Lagerflansch 4 aufgenommene Lager gelagert. Auf der vom Statorgehäuse 1 abgewandten Seite des Lagerschilds 3 ist ein Lüfter 5 auf die Rotorwelle 2 aufgeschoben und drehfest verbunden.

Eine Lüfterhaube 6 umgibt den Lüfter 5 und ist am Lagerschild 3 befestigt.

Auf die Rotorwelle 2 ist ein vorzugsweise ringartig ausgeformter Rotor 8 aufgeschoben und verbunden, insbesondere kraftschlüssig verbunden, mit der Rotorwelle 2.

Der Rotor 8 ist aus einem Material gefertigt, das eine höhere Permeabilität als die Rotorwelle 2 aufweist. Vorzugsweise ist die Rotorwelle 2 aus Einsatzstahl gefertigt.

Der Rotor 8 weist axial durchgehende Ausnehmungen, insbesondere Hohlräume 50, auf, die zur Aufnahme von Stäben eines Kurzschlusskäfigs vorgesehen sind. Hierzu wird in die Ausnehmungen flüssiges Aluminium-haltiges oder flüssiges Kupfer-haltiges Material gespritzt, so dass nach Erkalten dieses Materials die Stäbe hergestellt sind.

Axial beidseitig werden am Rotor 8 Ringe 7 angedrückt, welche die Stäbe, insbesondere die axialen Enden der Stäbe, elektrisch kontaktieren und somit den Kurzschlusskäfig vervollständigen. Hierzu weisen die Ringe in Umfangsrichtung sich erstreckende Langlöcher auf, durch die jeweils eine Schraube hindurchragt, deren jeweiliger Schraubenkopf nach Art eines Bajonettverschlusses bei relativ zum Rotor 8 zunehmender Drehung der Ringe 7 den jeweiligen Ring 7 zunehmend axial an den Rotor 8 andrückt, weil die Wandstärke des die Langlöcher aufnehmenden Bereichs des Rings 7 in Umfangsrichtung zunimmt.

Die Ausnehmungen sind mit einem Schrägungswinkel ausgeführt. Somit erstrecken sich die Ausnehmungen in axialer Richtung zunehmend in Umfangsrichtung. Dabei sind die Ausnehmungen auf stets demselben Radialabstand angeordnet.

Axial gerichtete Nuten 30 ohne Schrägungswinkel sind nach radial außen offen ausgeführt und/oder in den Rotor 8 eingebracht, insbesondere wobei die Nuten 30 auf konstantem Radialabstand angeordnet sind und in axialer Richtung stets an der selben Umfangswinkelposition verbleiben, insbesondere also nicht zunehmend in Umfangsrichtung sich erstrecken.

Die Nuten 30 sind in Umfangsrichtung voneinander beabstandet, insbesondere gleichmäßig beabstandet. Vorzugsweise sind vier Nuten 30 am äußeren Umfang des Rotors 8 vorgesehen.

Durch das Einbringen dieser axial gerichteten, radial außen am Rotor 8 zur äußeren Umgebung hin offenen Nuten 30 münden einige der Ausnehmungen samt dem eingespritzten Material in eine jeweilige Nut 30. Dies bedeutet, dass entsprechende Stäbe in den jeweiligen Nuten blind enden und somit keinen Strom von einem der Ringe zum anderen der Ringe leiten können. Denn die Nuten 30 sind erst nach Einspritzen und Erkalten des Materials in den Rotor 8 eingebracht.

Die in Umfangsrichtung zwischen den Nuten 30 verbliebenen Bereiche des ursprünglich zylindrischen Rotors 8 fungieren als Polbereiche, welche einen Reluktanzbetrieb ermöglichen. Denn die verbliebenen Bereiche überragen die Nuten radial und versuchen sich derart auszurichten, dass die Magnetfeldlinien möglichst kurz sind. Somit wird ein Drehmoment im Reluktanzbetrieb erzeugt, das zu einer möglichst synchronen Drehbewegung des Rotors im vom Stator erzeugten Drehfeld gelangen will.

Zusätzlich weist der Rotor 8 aber auch einen Kurzschlusskäfig auf, der einen Betrieb als Asynchronmotor ermöglicht. Insgesamt ist ein verbessertes Anlaufen des nach dem Anlaufen synchron mit dem Drehfeld betriebenen Elektromotors ermöglicht.

Die in Umfangsrichtung gemessene Breite der Nuten ist kleiner als der in Umfangsrichtung gemessene Abstand zwischen jeweils zwei in Umfangsrichtung gemessen nächstbenachbarten Nuten.

Vorzugsweise weist der Rotor 8 Silizium-Stahl auf. Denn Eisensilizid weist eine sehr hohe magnetische Permeabilität auf. Auf diese Weise ist der Rotor 8 mit einer höheren magnetischen Permeabilität ausstattbar als die Rotorwelle 2.

### Bezugszeichenliste

1 Statorgehäuse
2 Rotorwelle
3 Lagerschild
4 Lagerflansch
5 Lüfter
6 Lüfterhaube
7 Ring
8 Rotor, insbesondere Rotor mit Polbereichen
30 Nut
50 Hohlraum für Stab des Kurzschlusskäfigs

## Patentansprüche

1. Elektromotor mit Rotor (8) und Kurzschlusskäfig,
wobei der Kurzschlusskäfig zwei voneinander axial, insbesondere also in Richtung der Drehachse des Rotors (8), beabstandete, über Stäbe miteinander elektrisch verbundene Ringe (7) aufweist,
wobei der Rotor (8) axial durchgehende Ausnehmungen (50) zur Aufnahme der Stäbe aufweist,
wobei die Ausnehmungen (50) in Umfangsrichtung voneinander beabstandet sind,
**wobei** der Rotor (8) nach radial außen offene Axialnuten (30) aufweist,
wobei der von den Axialnuten (30) überdeckte Radialabstandsbereich den von den Stäben überdeckten Radialabstandsbereich umfasst,
**dadurch gekennzeichnet, dass**
**erste Stäbe des Kurzschlusskäfigs die beiden Ringe (7) miteinander verbinden**
**und andere Stäbe in jeweiligen Axialnuten blind** enden, so dass sie keinen Strom von einem der Ringe zum anderen der Ringe leiten können,
**insbesondere nachdem die Axialnnuten** (30) **in das durch die Stäbe stabilisierte Blechpaket des Rotors (8) mittels Fräsen eingebracht sind.**

2. Elektromotor nach Anspruch 1,
**dadurch gekennzeichnet, dass**
die Ringachse der Ringe (7), insbesondere der vorzugsweise als Kreisringe ausgeführten Ringe (7), koaxial zur Drehachse des Rotors (8) ausgerichtet ist.

3. Elektromotor nach einem der vorangegangenen Ansprüche,
**dadurch gekennzeichnet, dass**
die Axialnuten einen verschwindenden Schrägungswinkel aufweisen.

4. Elektromotor nach einem der vorangegangenen Ansprüche,
**dadurch gekennzeichnet, dass**
die Axialnuten einen ersten Schrägungswinkel aufweisen,
wobei die Stäbe einen zweiten Schrägungswinkel aufweisen, wobei der erste Schrägungswinkel unterschiedlich zum zweiten Schrägungswinkel ist,
insbesondere wobei der erste Schrägungswinkel Null beträgt und der zweite Schrägungswinkel einen Wert zwischen 5° und 30° aufweist.

5. Elektromotor nach einem der vorangegangenen Ansprüche,
**dadurch gekennzeichnet, dass**
der von der jeweiligen Axialnut an einer jeweiligen axialen Position überdeckte Umfangswinkelbereich unabhängig von der axialen Position ist.

6. Elektromotor nach einem der vorangegangenen Ansprüche,
**dadurch gekennzeichnet, dass**
die Axialnuten einen von der axialen Position unabhängigen Querschnitt aufweisen.

7. Elektromotor nach einem der vorangegangenen Ansprüche,
**dadurch gekennzeichnet, dass**
der von der jeweiligen Axialnut an einer jeweiligen axialen Position überdeckte Umfangswinkelbereich betragsmäßig größer ist als der von dem jeweiligen Stab in Umfangsrichtung überdeckte Bereich, insbesondere mindestens dreimal größer.

8. Elektromotor nach einem der vorangegangenen Ansprüche,
**dadurch gekennzeichnet, dass**
der jeweilige Ring (7) mittels eines Bajonettverschlusses am Rotor (8) befestigt ist.

9. Elektromotor nach Anspruch 8,
**dadurch gekennzeichnet, dass**
der jeweilige Ring (7) ein in Umfangsrichtung sich erstreckendes Langloch aufweist, durch welches eine in eine axial gerichtete Gewindebohrung des Rotors (8) eingeschraubte Schraube hindurchragt, deren Schraubenkopf den Ring (7) auf die Enden von Stäben drückt.

10. Elektromotor nach Anspruch 9,
**dadurch gekennzeichnet, dass**
die axiale Wandstärke des Rings (7) am Randbereich des Langlochs mit zunehmendem Umfangswinkel zunehmend oder mit abnehmendem Umfangswinkel zunehmend ausgeführt ist.

11. Elektromotor nach einem der vorangegangenen Ansprüche,
**dadurch gekennzeichnet, dass**
in dem jeweiligen nicht von den Axialnuten unterbrochenen Umfangswinkelbereich die Ausnehmungen in Umfangsrichtung voneinander regelmäßig beabstandet sind.

12. Elektromotor nach einem der vorangegangenen Ansprüche,
**dadurch gekennzeichnet, dass**
das Material des Rotors (8) eine höhere magnetische Permeabilität aufweist als das Material der Rotorwelle (2),
insbesondere wobei das Material des Rotors (8) Eisen und Silizium aufweist und/oder Eisensilizid aufweist,
und/oder dass
die Axialnuten in Umfangsrichtung voneinander regelmäßig beabstandet sind,
insbesondere wobei die Anzahl der Axialnuten zwischen drei und neun beträgt.

13. Elektromotor nach einem der vorangegangenen Ansprüche,
**dadurch gekennzeichnet, dass**
die Axialnuten axial durchgehend am Rotor (8) eingebracht sind.

14. Elektromotor nach einem der vorangegangenen Ansprüche,
**dadurch gekennzeichnet, dass**
der Rotor (8) als Blechpaket ausgeführt ist,
insbesondere wobei der Rotor (8) als Stapel von Einzelblechen, die jeweils als Stanzteile gefertigt sind, ausgeführt ist, wobei die Einzelbleche miteinander schweißverbunden sind und/oder mittels durch den Stapel axial durchgehender Zugstange aufeinandergepresst sind,
insbesondere wobei die Stapelrichtung parallel zur axialen Richtung ausgerichtet ist.

## Claims

1. Electric motor comprising a rotor (8) and a squirrel cage,
the squirrel cage having two rings (7) which are spaced apart from one another axially, i.e. in particular in the direction of the axis of rotation of the rotor (8), and which are electrically interconnected by means of bars,
the rotor (8) having axially through-going cut-outs (50) for receiving the bars,
the cut-outs (50) being spaced apart from one another in the circumferential direction,
the rotor (8) having axial grooves (30) that are open radially outwards,
the radial clearance region covered by the axial grooves (30) encompassing the radial clearance region covered by the bars,
**characterised in that**
first bars of the squirrel cage interconnect the two rings (7), and other bars end blind in respective axial grooves such that they cannot conduct any current from one of the rings to the other of the rings, in particular once the axial grooves (30) have been made by means of milling in the laminated core, which is stabilised by the bars, of the rotor (8).

2. Electric motor according to claim 1,
**characterised in that**
the ring axis of the rings (7), in particular rings (7) formed preferably as annuli, is oriented coaxially with the axis of rotation of the rotor (8).

3. Electric motor according to any of the preceding claims,
**characterised in that**
the axial grooves have an infinitesimal angle of skew.

4. Electric motor according to any of the preceding claims,
**characterised in that**
the axial grooves have a first angle of skew,
the bars having a second angle of skew, the first angle of skew being different from the second angle of skew,
in particular the first angle of skew being zero and the second angle of skew having a value between 5° and 30°.

5. Electric motor according to any of the preceding claims,
**characterised in that**
the circumferential-angle region covered by each axial groove at a particular axial position is independent of the axial position.

6. Electric motor according to any of the preceding claims,
**characterised in that**
the axial grooves have a cross section that is independent of the axial position.

7. Electric motor according to any of the preceding claims,
**characterised in that**
the magnitude of the circumferential-angle region covered by each axial groove at a particular axial position is greater, in particular at least three times greater, than the region covered by each bar in the circumferential direction.

8. Electric motor according to any of the preceding claims,
**characterised in that**
each ring (7) is fastened to the rotor (8) by means of a bayonet joint.

9. Electric motor according to claim 8,
**characterised in that**
each ring (7) has a slot which extends in the circumferential direction and through which there projects a screw, which is screwed into an axially directed threaded bore in the rotor (8) and the screw head of which presses the ring (7) against the ends of bars.

10. Electric motor according to claim 9,
**characterised in that**
the axial wall thickness of the ring (7) at the edge region of the slot is configured to increase as the circumferential angle increases or to increase as the circumferential angle decreases.

11. Electric motor according to any of the preceding claims,
**characterised in that**
in each circumferential-angle region not broken up by the axial grooves, the cut-outs are regularly spaced apart from one another in the circumferential direction.

12. Electric motor according to any of the preceding claims,
**characterised in that**
the material of the rotor (8) has a higher magnetic permeability than the material of the rotor shaft (2),
the material of the rotor (8) in particular comprising iron and silicon and/or comprising iron silicide,
and/or **in that**
the axial grooves are regularly spaced apart from one another in the circumferential direction,
the number of axial grooves in particular being between three and nine.

13. Electric motor according to any of the preceding claims,
**characterised in that**
the axial grooves are made in the rotor (8) in an axially through-going manner.

14. Electric motor according to any of the preceding claims,
**characterised in that**
the rotor (8) is configured as a laminated core,
the rotor (8) in particular being configured as a stack of laminations that are each produced as punched parts, the laminations being interconnected by welding and/or being pressed together by means of tie rods that extend axially through the stack,
the stacking direction in particular being oriented in parallel with the axial direction.

## Revendications

1. Moteur électrique avec rotor (8) et cage à court-circuit, la cage à court-circuit présentant deux anneaux (7) espacés axialement l'un de l'autre, en particulier donc dans la direction de l'axe de rotation du rotor (8), et reliés électriquement l'un à l'autre par des barres, le rotor (8) présentant des évidements (50) traversant axialement pour la réception des barres,. les évidements (50) étant espacés les uns des autres en direction périphérique,. le rotor (8) présentant des rainures axiales (30) ouvertes radialement vers l'extérieur, la zone d'écart radial recouverte par les rainures axiales (30) comprenant la zone d'écart radial recouverte par les barres, **caractérisé en ce que** des premières barres de la cage à court-circuit relient les deux anneaux (7) l'un à l'autre 9. et d'autres barres se terminent à l'aveugle dans les rainures axiales respectives, de sorte qu'elles ne peuvent pas conduire de courant d'un des anneaux à l'autre des anneaux, en particulier après que les rainures axiales (30) ont été introduites dans le paquet de tôles du rotor (8) stabilisé par les barres au moyen de fraisage.

2. Moteur électrique selon la revendication 1, **caractérisé en ce que** l'axe de l'anneau des anneaux (7), en particulier des anneaux (7) réalisés de préférence comme anneaux circulaires, est aligné coaxialement à l'axe de rotation du rotor (8).

3. Moteur électrique selon l'une des revendications précédentes, **caractérisé en ce que** les rainures axiales présentent un angle d'inclinaison nul.

4. Moteur électrique selon l'une des revendications précédentes, **caractérisé en ce que** les rainures axiales présentent un premier angle d'inclinaison, les barres présentant un second angle d'inclinaison, le premier angle d'inclinaison étant différent du second angle d'inclinaison, en particulier le premier angle d'inclinaison étant nul et le second angle d'inclinaison présentant une valeur comprise entre 5° et 30°.

5. Moteur électrique selon l'une des revendications précédentes, **caractérisé en ce que** la zone d'angle périphérique recouverte par la rainure axiale respective à une position axiale respective est indépendante de la position axiale.

6. Moteur électrique selon l'une des revendications précédentes, **caractérisé en ce que** les rainures axiales présentent une section transversale indépendante de la position axiale.

7. Moteur électrique selon l'une des revendications précédentes, **caractérisé en ce que** la zone d'angle périphérique recouverte par la rainure axiale respective à une position axiale respective est en valeur absolue supérieure à la zone recouverte en direction périphérique par la barre respective, en particulier au moins trois fois supérieure.

8. Moteur électrique selon l'une des revendications précédentes, **caractérisé en ce que** l'anneau respectif (7) est fixé au rotor (8) au moyen d'une fermeture à baïonnette.

9. Moteur électrique selon la revendication 8, **caractérisé en ce que** l'anneau respectif (7) présente un trou oblong s'étendant en direction périphérique, à travers lequel passe une vis vissée dans un trou taraudé dirigé axialement du rotor (8), dont la tête de vis appuie l'anneau (7) sur les extrémités des barres.

10. Moteur électrique selon la revendication 9, **caractérisé en ce que** l'épaisseur de paroi axiale de l'anneau (7) dans la zone périphérique du trou oblong augmente avec l'angle périphérique croissant ou avec l'angle périphérique décroissant.

11. Moteur électrique selon l'une des revendications précédentes, **caractérisé en ce que** dans la zone d'angle périphérique respective non interrompue par les rainures axiales, les évidements sont régulièrement espacés les uns des autres en direction périphérique.

12. Moteur électrique selon l'une des revendications précédentes, **caractérisé en ce que** le matériau du rotor (8) présente une perméabilité magnétique supérieure à celle du matériau de l'arbre de rotor (2), en particulier le matériau du rotor (8) comprenant du fer et du silicium et/ou comprenant du siliciure de fer, et/ou **en ce que** les rainures axiales sont régulièrement espacées les unes des autres en direction périphérique, en particulier le nombre de rainures axiales étant compris entre trois et neuf.

13. Moteur électrique selon l'une des revendications précédentes, **caractérisé en ce que** les rainures axiales sont introduites axialement de manière traversante dans le rotor (8).

14. Moteur électrique selon l'une des revendications précédentes, **caractérisé en ce que** le rotor (8) est réalisé comme paquet de tôles, en particulier le rotor (8) étant réalisé comme un empilement de tôles individuelles, chacune étant fabriquée comme pièce emboutie, les tôles individuelles étant soudées entre elles et/ou comprimées les unes contre les autres au moyen d'une tige de traction traversant axialement l'empilement, en particulier la direction d'empilement étant alignée parallèlement à la direction axiale.
